# EUROPEAN PATENT SPECIFICATION

(11) **EP 2 286 485 B1**
(45) Date of publication and mention of the grant of the patent: **17.08.2016**
(21) Application number: 09733657.2
(22) Date of filing: 16.04.2009
(51) Int. Cl.: H01P 7/08, G06K 19/07, H01Q 1/22, H01P 1/203

(54) **RADIO FREQUENCY TRANSPONDER**
HOCHFREQUENZTRANSPONDER
TRANSPONDEUR À RADIOFRÉQUENCES

(30) Priority: 16.04.2008 AU 2008901889
(43) Date of publication of application: 23.02.2011
(73) Proprietor: Monash University, Clayton VIC 3168 (AU)
(72) Inventor: PRERADOVIC, Stevan, Endeavour Hills Victoria 3802 (AU); KARMAKAR, Nemai Chandra, Wheelers Hill Victoria 3250 (AU); BALBIN, Isaac, South Caulfield Victoria 3162 (AU); ROY, Sushim, Mukul, Clayton Victoria 3168 (AU); SWIEGERS, Gerhard, Frederick, Vermont South Victoria 3133 (AU)
(74) Representative: Hopkin, Tobias J.B.
(86) International application number: PCT/AU2009/000463
(87) International publication number: WO 2009/126999

(56) References cited:
- US-B1- 6 304 169
- US-B1- 6 378 360
- US-B2- 7 353 997
- '2005 IEEE MTT-S International Microwave Symposium Digest, 12-17 June 2005', 2005 article JALALY ET AL.: 'RF Barcodes using Multiple Frequency Bands', XP010844450
- '2008 IEEE International Conference on RFID, USA, 16-17 April 2008', 2008 article PRERADOVIC ET AL.: 'A Novel Chipless RFID System Based on Planar Multiresonators for Barcode Replacement', XP031252205

## Description

### FIELD OF THE INVENTION

The present invention relates to radio frequency transponders, and more particularly to passive transponder structures for encoding identifying information and/or other data, and methods for encoding information in such structures. Applications of the invention include, without limitation, the manufacture and operation of passive devices, such as chipless Radio Frequency Identification (RFID) tags, utilising the structures and encoding methods of the invention.

### BACKGROUND OF THE INVENTION

There exist many applications in which it is advantageous to mark articles with identifying information that can be detected and/or read by electronic means. These applications include logistics (*eg* tracking of articles in storage and/or transport), salles (*eg* automated identification and billing/charging for items), and security (*eg* identification and/or authentication of documents and/or articles including identity cards and negotiable instruments such as bank notes).

Barcodes are presently amongst the most widespread identification systems. The most common type of barcode includes a sequence of printed vertical bars and spaces to represent numbers and symbols. Barcode identification is a line-of-sight process that involves scanning a printed barcode with a laser reader apparatus. In this process, a laser beam is directed onto the barcode, and either reflected or absorbed by the printed bars and spaces, with the resulting pattern detected by the reader and converted into information symbols according to a conversion protocol. The information symbols are then transferred to a computer, or other electronic device, for immediate action, or stored for later use.

Due to their very low cost, and ease of fabrication (*ie* they may be printed using a wide range of conventional printing technologies) barcodes are utilised in a very wide range of applications, including identification of products for retail sale, identification and check-out of library books, tracking of manufacturing and shipping movement, access and authentication (*eg* car park entry and exit, building access), and so forth. However, barcode technology has a number of disadvantages for many applications of practical interest. For example, the requirement for a "line-of-sight" between a barcode and the corresponding laser reader requires that a human operator generally be present to direct the reading process. Furthermore, it is typically possible to read only a single barcode at one time, requiring sequential scanning of items.

The most promising technology which overcomes the abovementioned limitations of barcode systems is Radio Frequency Identification (RFID). An RFID "tag", which is suitable to be fixed to articles requiring identification, includes a small antenna and, optionally, a microchip. Such a tag can be "interrogated" by a reader, which includes a transmitter and antenna for generating a radio frequency (RF) signal. The RFID tag is a transponder which receives the signal transmitted by the reader, and responds with a corresponding, detectable, RF signal of its own. This signal is received by the reader using either the same antenna employed for transmission, or a separate receiving antenna. The response generated by the RFID tag may include information, such as digital data, and may uniquely identify the tag, and therefore the article to which it has been affixed. With the use of suitable "anti-collision" protocols, it is possible to interrogate multiple tags substantially simultaneously.

Active RFID tags additionally include a power source, such as a battery, for powering the microchip, and generating the transmitted response signal. Such active tags are typically able to be detected from distances of at least a few metres, and may have relatively sophisticated processing capabilities. For example, an active tag may be configured to receive interrogation data from a reader, and to generate a relatively lengthy response that may depend upon the received information. Active tags may have substantial data storage capacity.

Passive RFID tags have no local power source, and rely upon energy received in the signal transmitted from the reader in order to generate a response. Accordingly, the response generated by a passive tag is generally less sophisticated, and may include less data, than the response that may be generated by an active tag. Typically, a passive tag of this type generates a response which includes an identifying code. The distance from which passive tags may be read is also typically less than that associated with an active RFID tag.

Additionally, some passive tags are completely chipless (*ie* do not include a microchip). Such tags can often be printed as labels, for example using conductive inks, and they are sometimes therefore known as "smart labels". While chipless tags may be extremely cheap to produce, the information that they provide is correspondingly limited. Indeed, in many cases the effective information capacity of a chipless tag is only a single bit, *ie* the presence or absence of a response to a signal transmitted by a corresponding reader simply identifies whether or not the tag is present within range.

There remain many applications, for example in logistics, requiring identifying information comparable to that represented by barcodes, *ie* a few tens of bits, at a comparable cost, ie a fraction of a cent per tag. The present cost of fabricating and affixing an RFID transponder including a microchip is on the order of 10 cents or more, even when mass-produced in very large volumes. Accordingly, there remain numerous high-volume, low-cost products (including retail items such as supermarket products) for which microchip RFID tagging is not economically viable. Cost is an issue in many other applications, including the production of identification, authentication and/or security features in negotiable instruments such as bank notes. For these applications, printable barcode technology, and other comparable optical technologies, remain the most economically viable solution, despite the various limitations of these technologies outlined above.

Patent specification US 6 304 169 B1 describes a RFID tag comprising an antenna connected to several LC resonators.

It would therefore be desirable to provide a remotely-readable identification device, which has a multi-bit capacity (at least comparable to existing barcode technology), and which has the potential for simple manufacture (such as by printing), at low cost. The present invention seeks to address this need.

### SUMMARY OF THE INVENTION

In one aspect, the present invention provides a resonator/antenna as specified in the claims.

In accordance with preferred embodiments, the term "resonator/antenna" encompasses a range of devices that are responsive to suitable RF excitation. In particular, the scope of the invention encompasses passive circuits having multiple frequency resonances, antennas having similar resonance properties, and combinations of resonators and antennas, such as a multi-resonant structure coupled to a suitable wideband antenna.

The term "radio frequency" or "RF", as used herein, encompasses frequencies commonly utilised in the propagation of electromagnetic radiation for communications and other purposes, and includes at least those frequencies in the range of 3 kHz to 300 GHz. Of particular interest, in relation to resonant structures formed in accordance with embodiments of the present invention, are those frequencies in the microwave and millimeter wave ranges, eg RF frequencies exceeding 1 GHz.

The term "dielectric", as used herein, encompasses a broad range of substantially non-conducting materials providing suitable substrates for conductive structures formed in accordance with embodiments of the invention. These include materials specifically designed for use as substrates for electrical circuits (such as FR4 and other materials commonly used in printed circuit board manufacture), as well as other materials, eg polymers and paper, from which articles such as security documents, bank notes, and other negotiable instruments may be fabricated.

Advantageously, embodiments of the invention are able to include information encoded within a multiresonant structure, which may be retrieved by applying an appropriate RF excitation (such as an impulse, a wideband signal, or a swept narrowband signal), wherein the information may be recovered by analysing the corresponding frequency response. More particularly, in preferred embodiments, the presence and/or absence of resonant responses in amplitude and/or phase at corresponding characteristic frequencies is used to encode digital information. Through the use of a multiresonant structure which comprises a plurality of substructures, with which the plurality of resonances are associated, the resonant response, and hence the encoded information, may be modified by suitable formation of the individual substructures.

In particularly preferred embodiments, there is a direct one-to-one correspondence between each substructure and an associated resonance of the resonator/antenna. Accordingly, each individual substructure may be utilised for the independent encoding of, for example, a single bit of information. The number of bits of information that may be encoded in such a resonator/antenna may thus be equal to the number of substructures/resonances. In other embodiments, a degree of coupling may exist between the various substructures of the overall conductive structure, such that the presence or absence, or the particular manner of formation, of an individual substructure has some influence on resonances of the structure other than the resonance most directly associated with the substructure, while still retaining substantially (*ie* sufficient for practical purposes) an association between each individual substructure and a corresponding resonance of the overall structure.

In another aspect the invention provides a method of encoding information for interrogation and/or retrieval by radio frequency (RF) excitation, as specified in the claims.

Preferably, the resonator/antenna structure provides a substantially direct correspondence between each one of said plurality of substructures and a characteristic frequency of an associated resonance in the RF domain, whereby modifying a substructure results in a change in the amplitude and/or phase response of the resonator/antenna structure at the corresponding characteristic frequency.

In particularly preferred embodiments, modifying each substructure results in the resonance at the corresponding characteristic frequency being substantially present or absent, whereby each substructure may be used to encode one bit of digital information.

In an exemplary embodiment, the resonator/antenna structure comprises a multi-stop-band filter comprising a plurality of cascaded resonator substructures, each of which corresponds with a stop-band having an associated characteristic frequency, such that information may be encoded in the structure by modifying the resonator substructures. In one particular embodiment of this type, the resonator substructures are spiral resonators.

In another exemplary embodiment, the resonator/antenna structure comprises a multi-resonator in the form of a wheel including a central "axle" substructure, a circumferential "rim" substructure, and a plurality of radial "spoke" substructures disposed therebetween, whereby a resonance is associated with each spoke substructure such that information may be encoded in the structure by modifying the spoke substructures.

In a further exemplary embodiment the resonator/antenna structure comprises a multi-resonator in the form of an interleaved resonant circuit, which comprises a plurality of parallel microstrip line substructures disposed therebetween, whereby a resonance is associated with each microstrip line substructure such that information may be encoded in the structure by modifying the microstrip line substructures.

The modifying step of the method may comprise shorting or removing one or more of the resonator substructures to encode one bit of digital information per resonator.

The resonator/antenna may be formed as a planar circuit using conventional PCP manufacturing methods. Alternatively, the resonator/antenna may be formed via a printing technique, using suitable conductive inks.

Modification of the resonator/antenna structure may be performed before manufacturing, ie the appropriate modifications may be determined and then the resonator/antenna fabricated (*eg* via a printing technique) so as to encode the desired information.

Alternatively, the structure may be modified after manufacture. That is, a resonator/antenna structure may be manufactured which comprises a multiresonator including a preformed plurality of substructures, and the substructures may subsequently be modified by physically altering the structure in order to form the desired resonator/antenna encoding the information. For example, conductive elements may be added in order to "short" specific substructure elements, or alternatively substructure elements may be disconnected from the overall structure by cutting, such as by laser ablation.

In yet another aspect, the invention provides a resonator/antenna comprising a planar conductive structure disposed on a dielectric substrate,
wherein said conductive structure comprises a fractal geometry characterised by a plurality of generating parameters and an iteration order,
whereby the conductive structure exhibits a plurality of distinct resonances in the radio frequency (RF) domain, a characteristic frequency of each said resonance being dependent upon said generating parameters and iteration order.

In a particularly preferred embodiment the fractal geometry is a Pythagoras Tree, wherein the generating parameters are dimensions of a generating rectangle, and a characteristic angle of a generating triangle.

Resonances of the conductive structure may be modified, in order to encode information within the structure, by shorting and/or disconnecting individual substructures, such as branches, of the fractal geometry.

In yet another aspect, the invention provides a chipless passive RFID tag, a security document, or a negotiable instrument (such as a bank note) comprising a resonator/antenna according to a previously described aspect of the invention, and/or which has been formed in accordance with a method embodying the present invention.

Further preferred features and advantages of the invention will be apparent to those skilled in the art from the following description of preferred embodiments of the invention, which should not be considered to be limiting of the scope of the invention as defined in the preceding statements, or in the claims appended hereto.

Comprises/comprising and grammatical variations thereof when used in this specification are to be taken to specify the presence of stated features, integers, steps or components or groups thereof, but do not preclude the presence or addition of one or more other features, integers, steps, components or groups thereof.

### BRIEF DESCRIPTION OF THE DRAWINGS

Preferred embodiments of the invention will now be described with reference to the accompanying drawings, in which like reference numerals represent like features, and wherein:
Figure 1 is a schematic illustration of an RFID system embodying the present invention;
Figure 2(a) is a photograph of a chipless tag according to an embodiment of the invention;
Figure 2(b) is a photograph of a multiresonator structure including a plurality of spiral resonators, according to an embodiment of the invention;
Figure 3 is a graph showing resonant frequency as a function of spiral length for the multiresonator structure of Figure 2(b);
Figures 4(a) and 4(b) are graphs illustrating frequency response of a multiresonator structure including six cascaded resonator structures;
Figure 5 is a photograph showing a modified multiresonator structure including spiral resonators, according to an embodiment of the invention;
Figures 6(a), 6(b) and 6(c) illustrate a frequency response of a modified multiresonator structure, according to an embodiment of the invention;
Figure 7 is a schematic diagram of an RFID test system including a chipless tag according to an embodiment of the invention;
Figures 8(a) and 8(b) illustrate results of experimental tests on a prototype six-bit chipless tag embodying the present invention;
Figure 9(a) is a photograph of a 35-bit chipless tag according to an embodiment of the invention;
Figure 9(b) illustrates a measured frequency response of the multiresonator structure of the tag of Figure 9(a);
Figures 10(a) and 10(b) illustrate a measured frequency response of the tag of Figure 9(a);
Figure 11 illustrates schematically a further embodiment of a chipless tag according to the present invention;
Figure 12 illustrates schematically representative properties of a wheel resonator structure according to an embodiment of the invention;
Figure 13 shows schematic illustrations of an interleaved resonant circuit and a wheel resonator according to embodiments of the invention;
Figure 14 illustrates principles of construction for a conductive combined resonator and antenna structure having a fractal geometry, according to an embodiment of the invention;
Figure 15 is a photograph of a fractal resonator/antenna structure having the fractal geometry of Figure 14;
Figure 16 is a graph showing measured return loss of the resonator/antenna structure illustrated in Figure 15;
Figure 17 is a graph of measured return loss for a number of alternative fractal resonator/antenna structures having the geometry illustrated in Figure 14;
Figure 18 is a block diagram illustrating elements of an experimental test set-up for a remotely interrogated resonator/antenna structure having a fractal geometry corresponding with Figure 14; and
Figure 19 is a graph illustrating an exemplary result of an experimental interrogation of a resonator/antenna having a fractal geometry, in accordance with the invention.

### DETAILED DESCRIPTION OF PREFERRED EMBODIMENTS

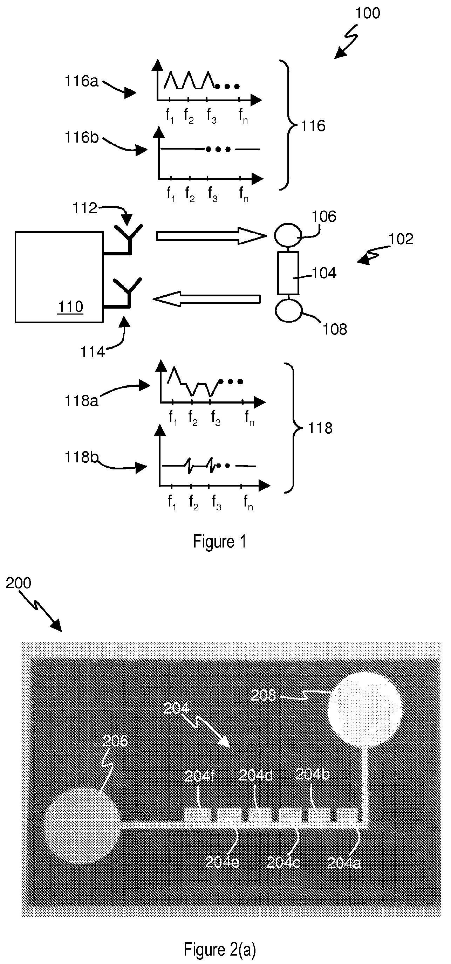

Figure 1 shows an RFID system 100 embodying the present invention. In particular, the system 100 includes a chipless RFID tag 102 incorporating a multiresonator structure 104 according to an embodiment of the invention. The multiresonator 104 is disposed between, and coupled to, a receiving antenna 106 and a transmitting antenna 108. In accordance with preferred arrangements, the receiving antenna 106, multiresonator 104 and transmitting antenna 108 are all fabricated on a single substrate. For example, the elements 106, 104, 108 may be formed on a dielectric substrate using conventional PCB manufacturing techniques, or may be printed onto a substrate using suitable conductive inks. Additional steps in the manufacturing process are described in greater detail below, where relevant, in relation to specific embodiments of the multiresonator 104.

An RFID reader, or interrogator 110 includes suitable transmitting/receiving electronics, as will be well-known to persons skilled in the relevant art, as well as a transmitting antenna 112 and receiving antenna 114. As will be appreciated, although the system 100 includes an RFID reader 110 and a chipless tag 102 having separate transmit and receive antennas, in alternative embodiments a single antenna may be used by the reader 110 and/or the tag 102 for both transmitting and receiving of radio frequency signals.

The RFID interrogator 110 transmits an RF signal which comprises a plurality of frequency components f₁ to fₙ, as indicated in the transmitted signal spectrum 116, having magnitude component 116a and phase component 116b. Equivalently, the interrogator 110 may transmit a wideband RF signal, or an impulse having a broad corresponding frequency spectrum. The transmitted signal 116 is received by the tag antenna 106, coupled to the multiresonator 104, and the resulting signal coupled to the tag transmit antenna 108, from which it propagates to the interrogator receiving antenna 114. Due to properties of the multiresonator 104, individual frequency components of the signal 116 received by the chipless tag 102 are coupled to the transmitting antenna 108, while other frequency components may be reflected, absorbed, or otherwise modified in magnitude and/or phase. Accordingly, the return signal from the tag 102, represented by the spectrum 118, having magnitude component 118a and phase component 118b, includes one or more of the frequency components present in the signal 116, in accordance with properties of the multiresonator 104.

Accordingly, the interrogator 110 is able to process the frequency response of the chipless tag 102, in which information may be encoded in accordance with properties of the multiresonator 104. For example, the presence of particular frequency components (such as components f₁, f₃ and fₙ of the spectrum 118a) may be interpreted, in a digital system, as representing binary "ones". Conversely, the absence of frequency components (such as f₂ of the spectrum 118b) may be interpreted as a binary "zero". Since the presence or absence of each such frequency component depends upon the properties of the multiresonator 104, the structure of the multiresonator 104 may be used to encode information in the RF frequency response of the chipless tag 102.

Alternatively, or additionally, the phase component 118b of the signal 118 transmitted back to the RFID interrogator may be modified in accordance with properties of the resonator 104. For example, phase jumps", or other variations in phase response, may arise at characteristic frequencies, *eg* f₂ and f₃ of the spectrum 118b. Such features of the transmitted signal phase may be used, either alone or in combination with analysis of the magnitude response 118a in order to retrieve information encoded within the multiresonator 104.

As such, the multiresonator 104, and hence the tag 102, may be assigned a unique identifier (ID) or "spectral signature". The spectral signature is obtained by interrogating the tag 102 using a multifrequency signal 116. The tag 102 retransmits the received signal, with information encoded in the magnitude and/or phase of the transmitted frequency spectrum.

Figure 2(a) is a photograph of the layout 200 of one particular embodiment of a chipless tag 102. In particular, the tag 200 includes a multiresonator circuit 204 which includes a series of spiral resonators 204a to 204f. The tag 200 further includes receiving and transmitting ultra-wideband monopole antennas 206, 208. For convenience, the antennas 206, 208 are arranged to have orthogonal polarisation configurations, in order to minimise crosstalk between the respective received and transmitted signals. As will be appreciated, while this facilitates interrogation of the tag 200, it is not necessary that the antennas 206, 208 have orthogonal polarisation configurations, and other techniques may be used in an RFID interrogator in order to separate transmitted and received signals.

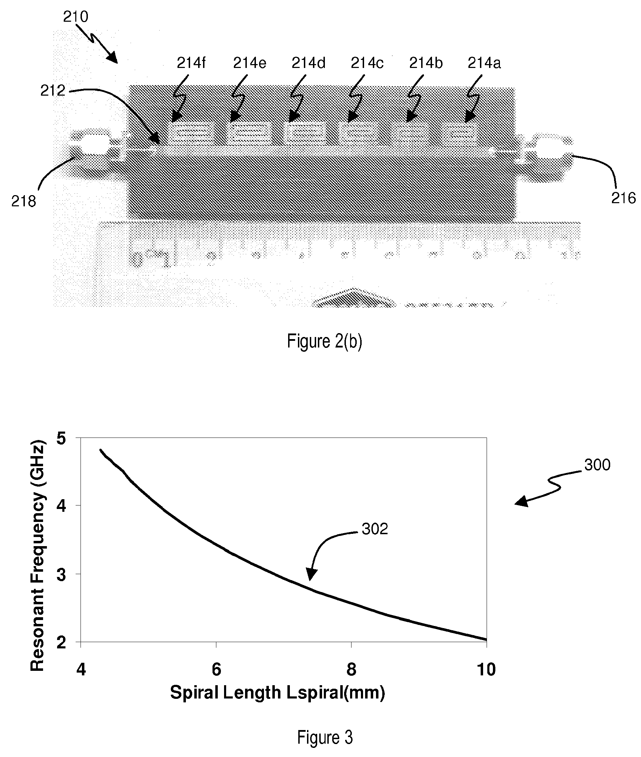

Figure 2(b) is a photograph 210 showing greater detail of a multiresonator structure including a plurality of cascaded spiral resonators 214a to 214f. A microstrip line 212 connects an input port 216 to an output port 218. Spiral resonator substructures 214a to 214f couple RF energy from the microstrip line 212 at particular resonant frequencies corresponding with the dimensions of the spiral substructure elements. Accordingly, the presence of a spiral resonator substructure element, *eg* 214a, having a particular resonant frequency results in a corresponding attenuation at that frequency in the response of the overall multiresonant structure 210. Accordingly, the presence or absence of each one of the spiral resonator substructures 214a to 214f determines the presence or absence of a corresponding resonance having a particular characteristic frequency and phase response, which may be used, for example, to encode one bit of digital information. Alternatively, the resonant response of each element 214a to 214f may be effectively "turned off" by modifying the substructure, eg by shorting the spiral, in order to alter or eliminate resonant coupling with the microstrip transmission line 302.

In Figure 3 there is shown a graph 300 in which resonant frequency (in gigahertz) is illustrated as a function of the length of the spiral resonator substructure element (in millimetres), by the trace 302. As can be seen, for spiral lengths between approximately 4 mm and approximately 10 mm, the corresponding resonant frequency is a monotonically decreasing function of length, varying between approximately 5 GHz and approximately 2 GHz. The spiral length is readily selected by variation of the overall dimensions of each spiral substructure element, and/or by the number of "turns" in the spiral. Accordingly, the graph 300 enables the design of a multiresonant structure having a plurality of selected characteristic resonant frequencies.

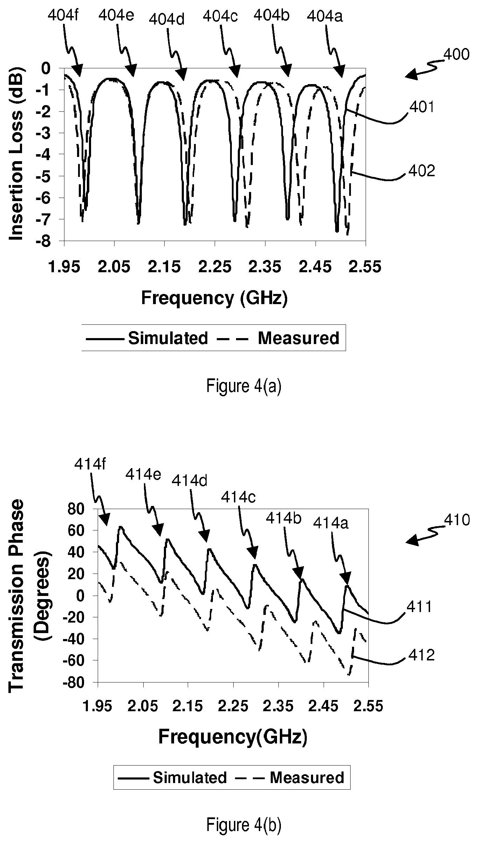

The frequency response of a multiresonant structure according to an embodiment of the invention is illustrated in the graphs 400 and 410 of Figures 4(a) and 4(b). In particular, the graph 400 shows the insertion loss (in dB) of a multiresonant structure comprising six spiral resonators, similar to the structure shown in Figures 2(a) and 2(b). The graph 400 shows simulated results 401 and corresponding measured results 402 of a prototype device. A close correspondence between simulation and experiment is observed. The "troughs" 404a to 404f correspond with resonant coupling of the individual spiral resonator substructures of the overall multiresonator structure. That is, each trough 404a to 404f corresponds, on a one-to-one basis, with a spiral resonator substructure such as 214a to 214f.

Figure 4(b) is a graph 410 showing the phase response corresponding with the insertion loss illustrated in Figure 4(a). A series of phase "jumps" or shifts, 414a to 414f, again correspond with resonant coupling of the individual spiral resonator substructures or the overall multiresonator substructure. The graph again shows a comparison between simulated results 411 and measured results 412. A phase offset is observed between simulation and measurement, which is largely an artefact of the simulation method employed. Neglecting the fixed offset, a close correspondence between relative phases may be seen between the simulated and measured results.

From the results shown in Figures 4(a) and 4(b) six distinct resonant nulls are observed in the magnitude, and six corresponding phase shifts, being due to the six spiral resonators comprising the multiresonator structure. Each spiral resonator therefore contributes to a particular resonance, which can be used for information encoding. For example, a null in the magnitude response, and/or the corresponding phase shift (of approximately 40 degrees in this case) may be used to represent a binary "zero" value, while the absence thereof may represent a binary "one".

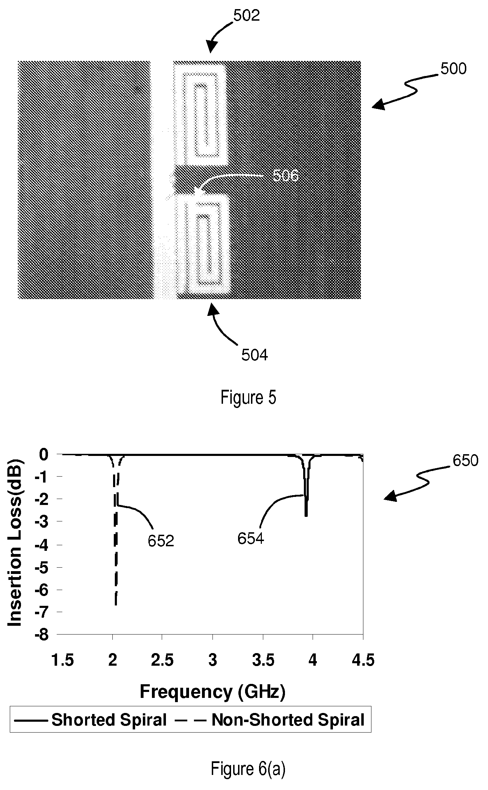

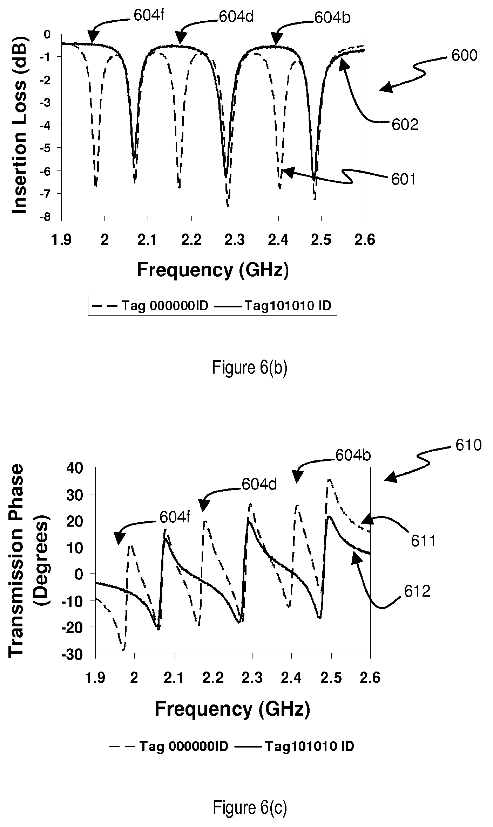

It is necessary to encode data into the multiresonator structure, in order to create an RFID tag having a unique ID. This may be done by selectively introducing or removing the individual resonances of the multiresonator. One method for doing this is described below with reference to Figures 5 and 6 (a) and (b) and (c).

Figure 5 is a photograph showing a section of a modified multiresonator structure 500. In the modified multiresonator 500 one or more of the spirals, are shorted in order to alter their resonant response. In the example shown, the upper spiral 502 is unmodified, while the lower spiral 504 is shorted via circuit track 506.

Figure 6(a) illustrates a typical effect of shorting one of the spiral resonator substructures within a multiresonator. The graph 650 shows the insertion loss (in dB) as a function of frequency for a single unshorted spiral 652, as compared with the response when the same spiral is shorted 654. As can be clearly seen, there is a reduction in the magnitude of the corresponding trough in the frequency response, as well as a substantial upward shift in the corresponding characteristic frequency. (It will be noted that this shift is consistent with the fact that the spiral has been effectively reduced in length, causing a shift in the resonant frequency predicted by the graph 300 shown in Figure 3.) The frequency shift is advantageous, in that it moves the residual resonance response to a frequency outside the range of interest, within which the information is encoded.

Figures 6(b) and 6(c) illustrate the effect of shorting alternate spiral resonator substructures within a six-element multiresonator structure. In this case, the modified multiresonant structures encode the binary sequence "101010". The graph 600 shows the comparative insertion loss for an unmodified (trace 601) and modified (trace 602) multiresonator structure. The unmodified structure effectively encodes the binary sequence "000000". As can readily be observed, shorting of alternate spiral resonator substructures in order to encode binary "ones" substantially removes the resonances existing in the unmodified multiresonator structure at 2.0 GHz, 2.2 GHz and 2.4 GHz. Removal of these troughs in the magnitude response produces the encoded data "ones" at frequencies 604b, 604d and 604f within the magnitude response 600.

The corresponding phase response results 610 are shown in Figure 6(c). The data "ones" are encoded as an absence of the phase shifts at 2.1 GHz, 2.3 GHz and 2.5 GHz which are present in the unmodified multiresonator structure. That is, the data "ones" are encoded in the phase response at the same frequencies 604b, 604d and 604f as in the magnitude response.

A small frequency shift may be observed in the magnitude and phase responses 600, 610, which results from the change in circuit layout (*ie* shorting of the spiral turns) and variations introduced by the manufacturing process (*ie* the PCB milling machine). However, this small frequency shift clearly does not impair the ability to detect the encoded data within the multiresonant structure.

Accordingly, digital information may be encoded into the structure of a multiresonator, by appropriate modification of the spiral resonator substructures. This modification may be performed prior to fabrication of the overall resonator structure. Alternatively, an unmodified resonator structure, eg 300, may be fabricated, and subsequently modified, for example by adding conductive material to create shorted spirals, in order to encode desired information in the structure.

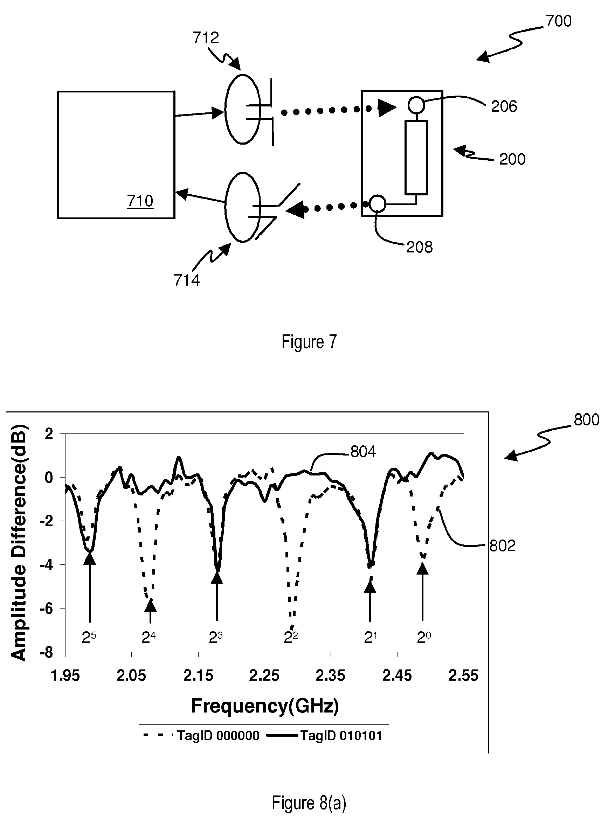

A multiresonator, eg 300, based upon spiral resonator substructures, may be incorporated into an experimental RFID test system 700, as illustrated in Figure 7. As shown, the chipless tag 200 (corresponding with the tag illustrated in Figure 2) is interrogated, for testing purposes, using a vector network analyser 710 coupled to a transmitting antenna 712. The transmitted signal is received by the tag receiving antenna 206, coupled to the resonator structure 204, and the resulting signal transmitted via tag transmitting antenna 208.

The return signal is received by antenna 714, which is coupled back to the vector network analyser 710. Accordingly, the magnitude and phase of the frequency response of the chipless tag 200 may be remotely interrogated, and information encoded therein may be retrieved.

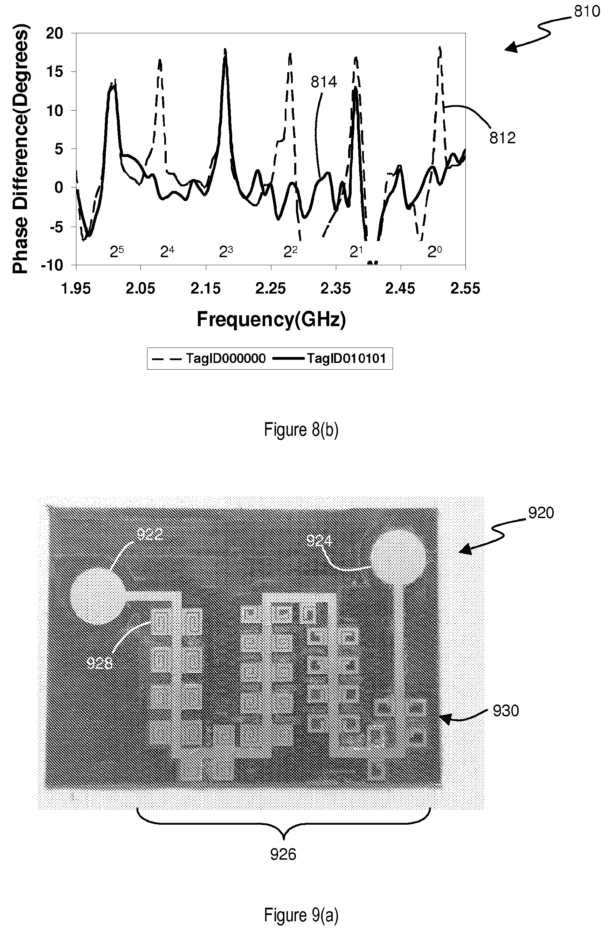

Figures 8(a) and 8(b) are graphs illustrating the results of experimental measurements performed using the arrangement 700 illustrated in Figure 7, at a distance between the antennas 712, 714 and the tag 200 of 5 cm. In each case, a comparison is shown between a "reference" tag having an ID of "000000", *ie* unmodified multiresonator structure, and a tag encoding the sequence "010101". The magnitude response 800 is shown in Figure 8(a). Comparing the reference response 802 with the response 804 for the tag having encoded data, the data "ones" corresponding with the values 2⁰, 2² and 2⁴ are clearly discernible. The corresponding phase response 810 is illustrated in Figure 8(b), wherein the response 812, for an unmodified multiresonant structure is compared with the response 814 for the modified structure encoding the sequence "010101". The encoded data "ones" within the phase response are clearly discernible as an absence of a corresponding phase "jump" corresponding with values 2⁰, 2² and 2⁴.

The following table summarises the variation in magnitude and phase at each of the characteristic frequencies, for multiresonant structures representing an all-zero sequence and an all-one sequence, as a function of the distance (in centimetres) between the interrogator antennas and the tag. This table therefore provides an indication of the sensitivity of the interrogator, at different distances.

| | **Distance (cm)** | **5** | **10** | **15** | **20** | **25** | **30** | **40** |
|---|---|---|---|---|---|---|---|---|
| **2⁵** | **ΔA** | -3 | -1 | 0 | 0 | 0 | 0 | 0 |
| | **LILO** | 14 | 15 | 14 | 12 | 12 | 10 | 7 |
| **2⁴** | **ΔA** | -6 | -2 | -1 | -1 | -4 | 0 | 0 |
| | **Δθ** | 16 | 40 | 18 | 14 | 16 | 18 | 9 |
| **2³** | **ΔA** | -4 | -3 | -1 | -2 | -4 | -1 | 0 |
| | **Δθ** | 17 | 30 | 28 | 17 | 24 | 15 | 6 |
| **2²** | **ΔA** | -7 | -2 | -1 | -3 | -3 | 0 | -1 |
| | **Δθ** | 17 | 25 | 16 | 16 | 22 | 15 | 12 |
| **2¹** | **ΔA** | -4 | -1 | -1 | -1 | -1 | -1 | 0 |
| | **Δθ** | 17 | 15 | 25 | 26 | 14 | 21 | 12 |
| **2⁰** | **ΔA** | -4 | -2 | -1 | -1 | -3 | -2 | -1 |
| | **Δθ** | 18 | 42 | 15 | 26 | 23 | 30 | 10 |

These results demonstrate that while either the magnitude or the phase response may effectively be utilised to extract the encoded data at short interrogation distances (eg less than 10 cm), as distance between the interrogator antennas and the tag increases the phase response is revealed as a more reliable decoding mechanism. In particular, even at a distance of 40 cm a measurable difference in the phase response exists at the characteristic frequencies, which may be used to distinguish between a data "zero" and a data "one".

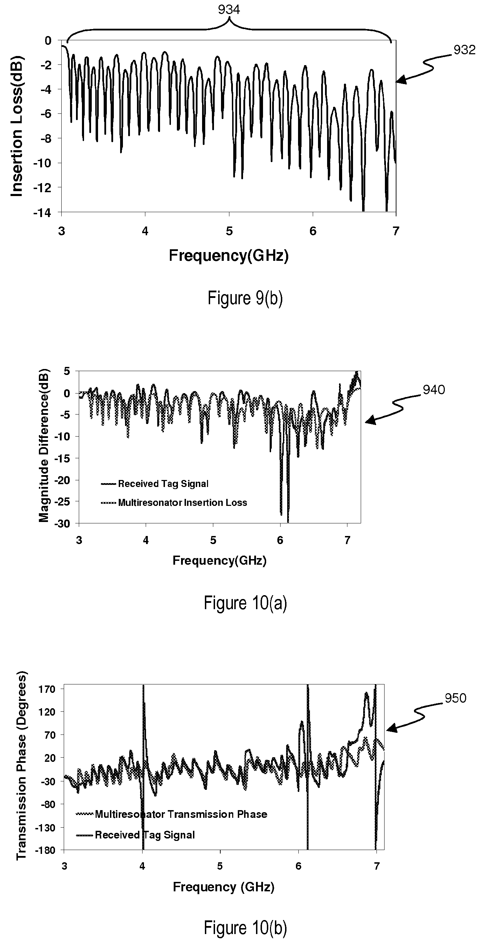

More demanding applications of RFID technology, such as authenticating security documents, negotiable instruments, or the like, will require much larger numbers of bits to be encoded. To this end, Figure 9(a) shows a photograph 920 of a chipless RFID tag comprising transmit and receive antennas 922, 924, and a multiresonant structure 926 including 35 individual spiral resonators, eg 928, 930. Such a tag is able to encode 35 bits of digital information. As can be seen, in order to minimise the size or the transponder, the microstrip line connecting the antennas 922, 924 has been arranged in a meander, and spiral resonators have been placed on both sides of the line, with a 3 mm separation between each. The measured insertion loss 932 of the tag 920 is shown in Figure 9(b). The 35 characteristic resonant frequencies are clearly visible (934). Such a tag is able to encode approximately 1.3 billion unique ID combinations.

Further experimental measurements on the tag 920 using the experimental RFID setup 700 illustrated in Figure 7, are shown in Figures 10(a) and 10(b), which depict the magnitude response 940 and phase response 950 respectively. The amplitude and phase information were measured such that a tag with no resonances (*ie* encoding all data "ones", with no nulls and no phase jumps) acts as a reference. A comparison of measurements on the multiresonator circuit with the experimental interrogation results shows successful operation of the chipless RFID tag, and detection.

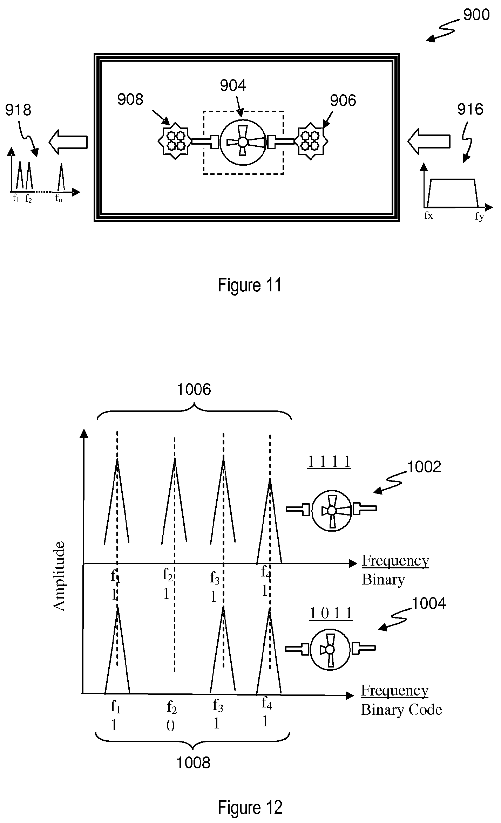

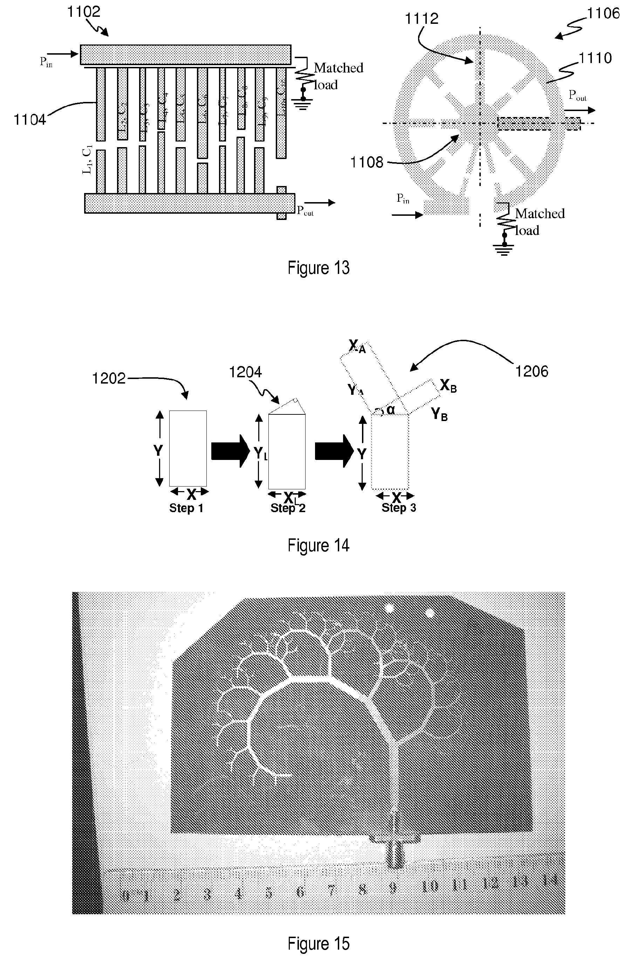

An alternative embodiment of a chipless tag 900, in accordance with the present invention, is illustrated in Figure 11. In particular, the tag includes a resonator 904, which has a "wheel" structure. As described in greater detail below, with reference to Figure 13, the wheel resonator structure 904 includes an "axle" substructure, a circumferential "rim" substructure, and a plurality of radial "spoke" substructures disposed therebetween. The wheel structure 904 exhibits a plurality of resonances in the RF domain, corresponding substantially with the placement and form of the "spoke" substructures.

The chipless tag 900 also includes a receiving antenna 906 and a transmitting antenna 908, coupled to respective input and output ports of the resonator 904. The tag 900 may accordingly be interrogated, for example with a wideband input signal 916, and a corresponding response signal 918 is returned.

Representative properties of the wheel resonator structure 904 are illustrated schematically in Figure 12. As shown, a first wheel resonator structure 1002 may exhibit, for example, four resonant peaks in the RF domain 1006. Accordingly, the structure may be used to encode the binary sequence "1111". A second resonant wheel structure 1004, having a different configuration of "spoke" substructures, may exhibit only three of the four resonances 1008, thereby encoding the binary sequence "1011". As with the sequential spiral resonator structure described previously, with reference to Figures 2 to 8, the relevant modifications to the "spoke" substructures of the wheel resonator structure 904 may be applied either during original fabrication of the tag 900, or may be applied by suitable modification subsequent to fabrication. For example, spokes may be removed by cutting of conductive portions of the fabricated structure, eg by mechanical means or by laser ablation. Alternatively, spokes may be added by depositing additional conductive material, *eg* by printing with conductive ink, or by adhering suitable conductive material, to the structure.

The origin of the above-described non-interfering, multi-resonant signatures of the wheel resonator 904, which may be used to encode information in accordance with the present invention, may be understood by considering the interleaved resonant circuit 1102 shown in Figure 13. The interleaved resonant circuit 1102 includes a plurality of "fingers" *eg* 1104. Each finger of the structure represents an inductance, whose value depends upon the width and length of the microstrip transmission line comprising the finger. The gap between each finger substructure represents a capacitance, which is similarly dependent upon the width/area of the gap. Accordingly, the particular dimensions of each set of separated fingers creates a unique LC resonant circuit having a characteristic spectral signature, which may be used to encode information. The conductive planar structure represented by the circuit 1102, with its plurality of "finger" substructures, may therefore be utilised in embodiments of the present invention in order to encode information within a resonator of a chipless RFID tag, or other article.

The structure 1106, also illustrated in Figure 13, represents the wheel resonator structure 904, and effectively results from "folding" the linear structure 1102 in order to produce a more compact circular wheel structure. The resulting wheel has a central axle substructure 1108, a circumferential rim substructure 1110, and a plurality of "spoke" substructures, eg 1112.

While the foregoing exemplary embodiments of the invention have utilised resonant structures and separate antennas for reception and transmission of interrogating signals, it will be appreciated that additional benefits may be achieved, for example in terms of more compact size, if the resonant structure can be incorporated into the antenna design. That is, an antenna having an inherent multi-resonant response, suitable for encoding of information in accordance with embodiments of the invention, may provide for more compact and practical implementation.

Figure 14 illustrates principles of construction for a conductive combined resonator and antenna structure having a fractal geometry. The particular geometry represented by Figure 14 is a Pythagorean Tree (PT), however it will be appreciated that similar principles may be applied to create resonator/antenna structures having different geometries.

As will be appreciated, fractal structures generally have self-similar properties, and accordingly may be generated using suitable rules, and on the basis of certain characteristic parameters. The PT structure illustrated in Figure 14 may be constructed using a generator rectangle 1202, and a generator triangle 1204. Specifically, the generator rectangle 1202 is characterised by dimensions X_{L} and Y_{L}. The generator triangle 1204 is a right-angle triangle with hypotenuse length equal to X_{L}, and accordingly is wholly characterised by a single parameter, for example the angle α. The generating process for the Pythagorean Tree then proceeds by constructing rectangles similar to the generating rectangle 1202 (*ie* having the same proportions) on each of the sides of the generator triangle adjacent to its right-angle, thereby producing the branching structure 1206.

The process may be repeated for any desired number of iterations in respect of each of the newly-constructed rectangles.

The PT structure is therefore characterised wholly by the generating parameters, being the generator rectangle dimensions X_{L} and Y_{L}, and the generator triangle angle α, along with the iteration order (ie the number of iterations of the generating process). A given PT may then be defined as PT (X_{L}, Y_{L}, α, i) where i is the iteration order.

Figure 15 is a photograph 1300 of a fractal resonator/antenna structure constructed in accordance with the foregoing procedure, and defined by PT (3, 18, 30, 9), where the dimensions are in millimetres, and the angle is represented in degrees. A number of further such structures have also been fabricated by the present inventors, having different parameters. As all of these structures are generally of similar appearance, the additional resonator/antenna designs are not depicted in the drawings.

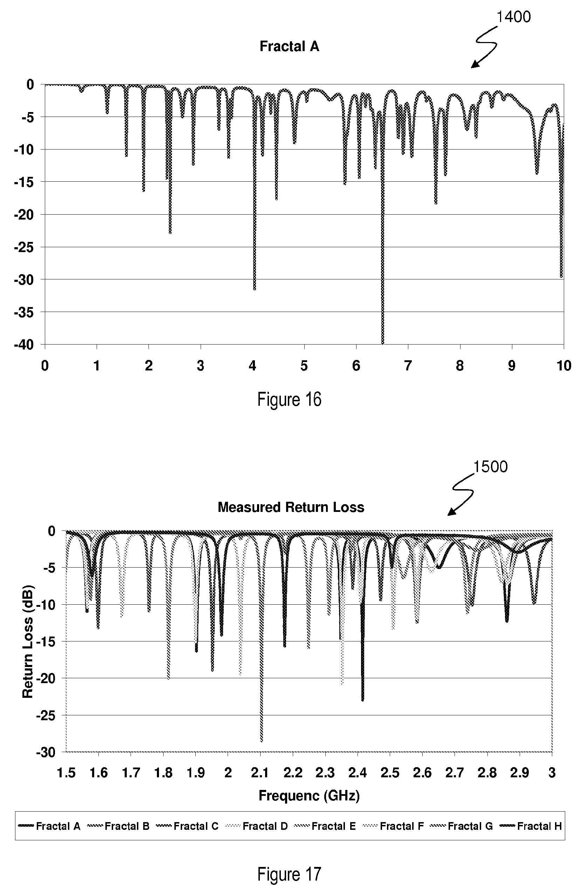

Figure 16 is a graph 1400 of the measured return loss as a function of frequency of the resonator/antenna structure 1300. As can be seen, the structure exhibits numerous resonances (on the order of 30), many of which are extremely distinct, and thus suitable for the encoding of information within the structure, in accordance with embodiments of the present invention. In particular, it has been found that by shorting certain "branches" of the Pythagorean Tree, for example using copper tape, selected resonances shown in the response 1400 may be removed, with minimal impact upon the remaining resonances. Alternatively, a structure, such as the PT 1300, could be formed with short-circuit connections already in place, and these may subsequently be cut or ablated in order to introduce the desired corresponding resonances. Furthermore, PT structures having desired resonances, and thereby encoding particular information content, may be predetermined and fabricated in the desired form, for example using conventional PCB fabrication techniques and/or suitable conductive printing processes.

Figure 17 shows a graph 1500 of measured return loss for a number of different PT fractal resonator/antenna structures, labelled Fractal A (corresponding with the structure 1300) to Fractal H. As can be seen, all of these structures exhibit similar resonance properties, although the depth and characteristic frequency of each resonance differs between the different structures. It is accordingly clear that, by varying the generating parameters and/or iteration order of a fractal geometry used to generate a conductive resonator/antenna structure, it may be possible to identify structures having particularly desirable properties for any given application.

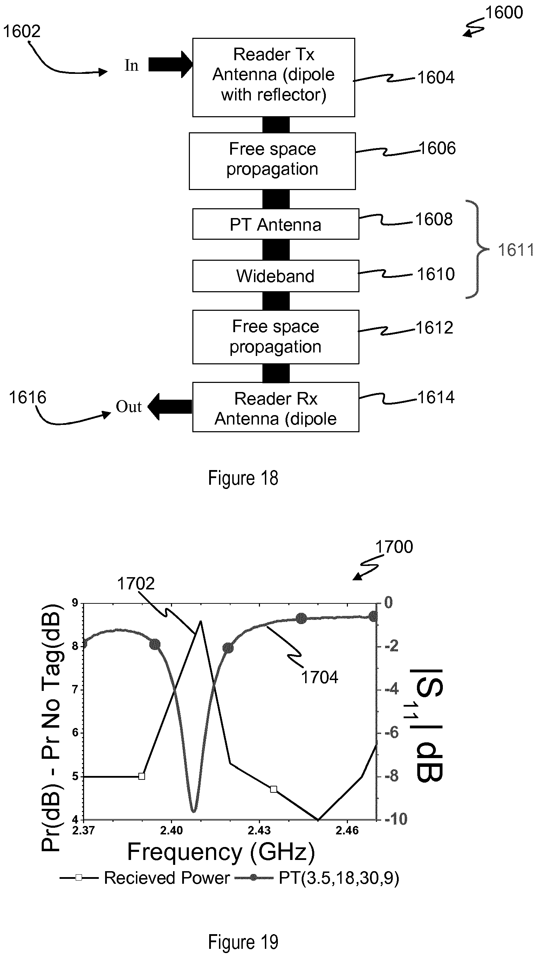

Figure 18 is a block diagram 1600 illustrating the elements of an experimental test set up for a remotely interrogated resonator/antenna structure comprising a PT fractal geometry. An input RF signal 1602 is coupled to the transmit antenna 1604 of a suitable reader or interrogator. The signal is propagated through free space (1606), and received by the PT antenna 1608. The PT antenna 1608 is coupled to a wideband antenna 1610 (eg similar to the wideband monopole antennas 206, 208) whereby the resulting signal again propagates through free space (1612) back to a receiving antenna 1614 of the reader or interrogator. It will be appreciated that the chipless RFID tag 1611 in this set-up does not require two separate antennas and a resonator structure, rather the PT antenna 1608 acts as both the resonator and one of the antennas. Accordingly, the use of such structures may reduce the size, cost and complexity of such devices.

Figure 19 is a graph 1700 illustrating an exemplary result of an experimental interrogation of a prototype PT antenna 1608 coupled to a wideband antenna 1610, in accordance with the arrangement 1600 depicted schematically in Figure 18. The graph 1700 includes a curve 1702 representing the measured received power, relative to the power received at the antenna 1614 when the tag is not present. A resonance 1702 of the PT resonator/antenna structure, corresponding with a "trough" in the measured S₁₁ magnitude 1704 of the structure, is clearly visible. This demonstrates the capability of the fractal geometry, being specifically the resonator/antenna geometry, to be remotely interrogated in order to identify the presence or absence of resonances at corresponding characteristic frequencies.

While the invention has been described in the foregoing with reference to a number of prototype chipless RFID tag devices, it will be appreciated that embodiments of the invention may be employed in a variety of other applications. For example, antenna/resonator structures embodying the invention may be fabricated on, printed on, or incorporated into, a variety of different articles, including, but not limited to, RFID tags, security documents, and negotiable instruments, such as bank notes. They may accordingly be used for security and/or authentication purposes, as well as for the identification, detection and/or tracking of various items or articles of interest.

It will therefore be understood that the invention is not limited to the specific embodiments described herein, which are provided by way of example only. Rather, the scope of the invention is as defined by the claims appended hereto.

## Claims

1. A resonator/antenna (102, 1611) having information encoded therein which may be retrieved by applying suitable radio frequency (RF) excitation, and identifying resonances in a corresponding RF frequency response, the resonator/antenna comprising a planar conductive structure disposed on a dielectric substrate which comprises a multiresonator structure (104, 1608) comprising a plurality of substructures with which are associated a plurality of resonances in the RF domain, each said resonance having a characteristic frequency dependent upon the substructures, whereby information is encoded in the frequency resonances characteristic of the structure **characterised in that** it includes first (106, 1608) and second (108, 1610) antennas for receiving and transmitting RF signals, and at least one (108, 1610) of said first and second antennas is a wideband antenna.

2. The resonator/antenna of claim 1 further **characterised in that** the presence and/or absence of resonant responses at corresponding characteristic frequencies is used to encode digital information.

3. The resonator/antenna of claim 1 or claim 2 further **characterised in that** the information is encoded at least partly in an amplitude response (400) of the resonator/antenna at said characteristic frequencies or at least partly in a phase response (410) of the resonator/antenna at said characteristic frequencies.

4. The resonator/antenna of any one of the preceding claims further **characterised in that** both of the first (106) and second (108) antennas comprise wideband antennas, and the multiresonator structure (104) is disposed between and coupled to the first and second antennas, whereby an RF signal received by the first antenna (106) is propagated via the multiresonator structure (104) and transmitted by the second antenna (108).

5. The resonator/antenna of claim 4 further **characterised in that** the multiresonator structure (104) comprises a multi-stop-band filter comprising a plurality of cascaded resonator structures (204), each of which corresponds with a stop-band having an associated characteristic frequency and phase response.

6. The resonator/antenna of claim 4 further **characterised in that** the planar conductive multiresonator structure comprises a wheel structure (904) including a central "axle" substructure (1108), a circumferential "rim" substructure (1110), and a plurality of radial "spoke" substructures (1112) disposed therebetween, wherein a resonance is associated with each spoke substructure.

7. The resonator/antenna of claim 4 further **characterised in that** the planar conductive multiresonator structure comprises an interleaved resonant circuit (1102), which comprises a plurality of parallel microstrip line substructures (1104) disposed therebetween, wherein a resonance is associated with each microstrip line substructure.

8. The resonator/antenna of any one of claims 4 to 7 further **characterised in that** said first and second wideband antennas (206, 208) are arranged to have orthogonal polarisation configurations.

9. The resonator/antenna of any one of claims 1 to 3 further **characterised in that** one of said first and second antennas comprises a fractal antenna (1300) having a geometry **characterised by** a plurality of generating parameters and an iteration order, wherein the fractal antenna exhibits a plurality of distinct resonances in the radio frequency (RF) domain, a characteristic frequency of each said resonance being dependent upon said generating parameters and iteration order.

10. A method of encoding information for interrogation and/or retrieval by radio frequency (RF) excitation, the method comprising:
providing a resonator/antenna structure (102, 1611) which comprises a multiresonator structure (104, 1608) comprising a plurality of substructures with which are associated a plurality of resonances in the RF domain, each said resonance having a characteristic frequency dependent upon the substructures, whereby information may be encoded in the frequency resonances characteristic of the structure;
defining a modified resonator/antenna structure by modifying the configuration thereof so as to alter the resonant properties in accordance with information to be encoded; and
forming a resonator/antenna comprising a planar conductive structure disposed on a dielectric substrate configured in accordance with said modified resonator/antenna structure,
whereby the encoded information may subsequently be determined by applying a suitable RF excitation to the resonator/antenna and identifying resonances in a corresponding RF frequency response.
**characterized in that** the resonator/antenna structure further comprises first (106, 1608) and second (108, 1610) antenna structures for receiving and transmitting RF signals, wherein at least one (108, 1610) of said antenna structures is a wideband antenna.

11. The method of claim 10 further **characterised in that** the information is encoded at least partly in an amplitude response (400) or a phase response (410) of the resonator/antenna structure at said characteristic frequencies, wherein said modifying the configuration thereof results in corresponding changes in said amplitude or phase response.

12. The method of claim 10 or claim 11 further **characterised in that** both of the first (106) and second (108) antennas comprise wideband antennas, and the multiresonator structure is disposed between and coupled to the first and second antennas, whereby an RF signal received by the first antenna will be propagated via the multiresonator structure and transmitted by the second antenna, and wherein modifying the configuration of the resonator/antenna structure comprises modifying the configuration of the multiresonator structure.

13. A chipless passive RFID tag, security document, or negotiable instrument **characterised in that** it comprises a resonator/antenna (102, 1611) according to any one of claims 1 to 9.

## Patentansprüche

1. Resonator/Antenne (102, 1611) mit einer darin codierten Information, welche durch Anwenden einer geeigneten Funkfrequenzanregung (RF) abgefragt werden kann und welche Resonanzen in einer entsprechenden RF-Frequenzantwort anzeigt, wobei der/die Resonator/Antenne eine auf einem dielektrischen Substrat angeordnete planare leitende Struktur umfasst, welche eine Multiresonatorstruktur (104, 1608) umfasst, welche mehrere Teilstrukturen umfasst, welchen mehrere Resonanzen in dem RF-Bereich zugeordnet sind, wobei jede Resonanz eine von den Teilstrukturen abhängige charakteristische Frequenz aufweist, wobei die Information in den für die Struktur charakteristischen Frequenzresonanzen codiert ist, **dadurch gekennzeichnet, dass** er/sie eine erste (106, 1608) und zweite (108, 1610) Antenne zum Empfangen und Senden von RF-Signalen aufweist, und
dass mindestens eine (108, 1610) von der ersten und zweiten Antenne eine Breitbandantenne ist.

2. Resonator/Antenne nach Anspruch 1, ferner **dadurch gekennzeichnet, dass** das Vorhandensein und/oder die Abwesenheit von Resonanzantworten an entsprechenden charakteristischen Frequenzen verwendet wird, um eine digitale Information zu codieren.

3. Resonator/Antenne nach Anspruch 1 oder Anspruch 2, ferner **dadurch gekennzeichnet, dass** die Information zumindest teilweise in einer Amplitudenantwort (400) des/der Resonators/Antenne bei den charakteristischen Frequenzen oder zumindest teilweise in einer Phasenantwort (410) von dem/der Resonator/Antenne bei den charakteristischen Frequenzen codiert ist.

4. Resonator/Antenne nach einem der vorhergehenden Ansprüche, ferner **dadurch gekennzeichnet, dass** sowohl die erste (106) als auch zweite (108) Antenne Breitbandantennen umfassen, und dass die Multiresonatorstruktur (104) zwischen der ersten und zweiten Antenne angeordnet ist und damit gekoppelt ist, wobei ein von der ersten Antenne (106) empfangenes RF-Signal über die Multiresonatorstruktur (104) weitergetragen und von der zweiten Antenne (108) gesendet wird.

5. Resonator/Antenne nach Anspruch 4, ferner **dadurch gekennzeichnet, dass** die Multiresonatorstruktur (104) ein Mehrfachsperrbandfilter umfasst, welches mehrere kaskadierte Resonatorstrukturen (204) umfasst, wobei jede davon einem Sperrband mit einer zugeordneten charakteristischen Frequenz und Phasenantwort entspricht.

6. Resonator/Antenne nach Anspruch 4, ferner **dadurch gekennzeichnet, dass** die planare leitende Multiresonatorstruktur eine Radstruktur (904) umfasst, welche eine zentrale "Achsen"-Teilstruktur (1108), "Rand"-Teilstruktur (1110) in Umfangsrichtung und mehrere radiale "Speichen"-Teilstrukturen (1112) dazwischen angeordnet aufweist, wobei eine Resonanz jeder Speichenteilstruktur zugeordnet ist.

7. Resonator/Antenne nach Anspruch 4, ferner **dadurch gekennzeichnet, dass** die planare leitende Multiresonatorstruktur einen verschachtelten Resonanzschaltkreis (1102) umfasst, welcher mehrere parallele Mikrostrip-Linienteilstrukturen (1104) dazwischen angeordnet umfasst, wobei eine Resonanz einer jeden Mikrostrip-Linienteilstruktur zugeordnet ist.

8. Resonator/Antenne nach einem der Ansprüche 4 bis 7, ferner **dadurch gekennzeichnet, dass** die erste und zweite Breitbandantenne (206, 208) ausgestaltet sind, orthogonale Polarisationskonfigurationen aufzuweisen.

9. Resonator/Antenne nach einem der Ansprüche 1 bis 3, ferner **dadurch gekennzeichnet, dass** eine von der ersten und zweiten Antenne eine Fraktalantenne (1300) umfasst, welche eine Geometrie aufweist, welche durch mehrere Erzeugungsparameter und eine Iterationsordnung gekennzeichnet ist, wobei die Fraktalantenne mehrere eindeutige Resonanzen in dem Funkfrequenzbereich (RF) zeigt, wobei eine charakteristische Frequenz von jeder der Resonanzen von den Erzeugungsparametern und der Iterationsordnung abhängt.

10. Verfahren zum Codieren einer Information für eine Abfrage und/oder ein Abrufen durch eine Funkfrequenzanregung (RF), wobei das Verfahren umfasst:
Bereitstellen einer Resonator/Antennen-Struktur (102, 1611), welche eine Multiresonatorstruktur (104, 1608) umfasst, welche mehrere Teilstrukturen umfasst, welchen mehrere Resonanzen in dem RF-Bereich zugeordnet sind, wobei jede Resonanz eine charakteristische Frequenz abhängig von den Teilstrukturen aufweist, wobei die Information in den für die Struktur charakteristischen Frequenzresonanzen codiert sein kann;
Definieren einer modifizierten Resonator/Antennen-Struktur durch Modifizieren der Konfiguration davon, um die Resonanzeigenschaften gemäß der zu codierenden Information zu ändern; und
Ausbilden eines/einer Resonators/Antenne, umfassend eine auf einem dielektrischen Substrat angeordnete planare leitende Struktur, welche gemäß der modifizierten Resonator/AntennenStruktur ausgebildet ist,
wobei die codierte Information nachfolgend durch Anwenden einer geeigneten RF-Anregung des/der Resonators/Antenne und Identifizieren von Resonanzen in einer entsprechenden RF-Frequenzantwort bestimmt werden kann,
**dadurch gekennzeichnet, dass** die Resonator/Antennen-Struktur ferner eine erste (106, 1608) und zweite (108, 1610) Antennenstruktur zum Empfangen und Senden von RF-Signalen umfasst, wobei mindestens eine (108, 1610) der Antennenstrukturen eine Breitbandantenne ist.

11. Verfahren nach Anspruch 10, ferner **dadurch gekennzeichnet, dass** die Information zumindest teilweise in einer Amplitudenantwort (400) oder einer Phasenantwort (410) der Resonator/Antennen-Struktur bei den charakteristischen Frequenzen codiert ist, wobei das modifizieren der Konfiguration davon zu entsprechenden Änderungen in der Amplituden- oder Phasenantwort führt.

12. Verfahren nach Anspruch 10 oder Anspruch 11, ferner **dadurch gekennzeichnet, dass** sowohl die erste (106) als auch zweite (108) Antenne Breitbandantennen umfassen, und dass die Multiresonatorstruktur zwischen der ersten und zweiten Antenne angeordnet ist und damit gekoppelt ist, wobei ein von der ersten Antenne empfangenes RF-Signal über die Multiresonatorstruktur weitergetragen und von der zweiten Antenne gesendet wird, und wobei das Modifizieren der Konfiguration der Resonator/Antennen-Struktur ein Modifizieren der Konfiguration der Multiresonatorstruktur umfasst.

13. Chiploses passives RFID-Tag, Sicherheitsdokument oder Wertpapier, **dadurch gekennzeichnet, dass** es einen/eine Resonator/Antenne (102, 1611) nach einem der Ansprüche 1 bis 9 umfasst.

## Revendications

1. Résonateur/antenne (102, 1611) ayant des informations codées en lui qui peuvent être récupérées en appliquant une excitation radiofréquence (RF) convenable, et en identifiant des résonances dans une réponse de fréquence RF correspondante, le résonateur/antenne comprenant une structure conductrice plane disposée sur un substrat diélectrique qui comprend une structure de multirésonateur (104, 1608) comprenant une pluralité de sous-structures auxquelles sont associés une pluralité de résonances dans le domaine RF, chaque dite résonance ayant une fréquence caractéristique dépendant des sous-structures, moyennant quoi des informations sont codées dans les résonances de fréquence caractéristiques de la structure, **caractérisé en ce qu'**il inclut des première (106, 1608) et seconde (108, 1610) antennes pour recevoir et transmettre des signaux RF, et au moins une (108, 1610) desdites première et seconde antennes et une antenne à bande large.

2. Résonateur/antenne selon la revendication 1 **caractérisé en outre en ce que** la présence et/ou l'absence de réponses résonantes à des fréquences caractéristiques correspondantes est utilisée pour coder des informations numériques.

3. Résonateur/antenne selon la revendication 1 ou la revendication 2 **caractérisé en outre en ce que** les informations sont codées au moins en partie dans une réponse en amplitude (400) du résonateur/antenne auxdites fréquences caractéristiques ou au moins en partie dans une réponse en phase (410) du résonateur/antenne auxdites fréquences caractéristiques.

4. Résonateur/antenne selon l'une quelconque des revendications précédentes **caractérisé en outre en ce que** les deux première (106) et seconde (108) antennes comprennent des antennes à large bande, et la structure de multirésonateur (104) est disposée entre et couplée aux première et seconde antennes, moyennant quoi un signal RF reçu par la première antenne (106) est propagé via la structure de multirésonateur (104) et transmis par la seconde antenne (108).

5. Résonateur/antenne selon la revendication 4 **caractérisé en outre en ce que** la structure de multirésonateur (104) comprend un filtre coupe-bande multiple comprenant une pluralité de structures de résonateur en cascade (204), chacune d'elles correspondant à une bande d'arrêt ayant une fréquence caractéristique et une réponse de phase associées.

6. Résonateur/antenne selon la revendication 4 **caractérisé en outre en ce que** la structure de multirésonateur conductrice plane comprend une structure de roue (904) incluant une sous-structure d"'axe" central (1108), une sous-structure de "jante" circonférentielle (1110), et une pluralité de sous-structures de "rayons" radiaux (1112) disposées entre elles, dans lequel une résonance est associée à chaque sous-structure de rayon.

7. Résonateur/antenne selon la revendication 4 **caractérisé en outre en ce que** la structure de multirésonateur conductrice plane comprend un circuit résonant entrelacé (1102), qui comprend une pluralité de sous-structures en lignes de microbandes parallèles (1104) disposées entre elles, dans lequel une résonance est associée à chaque structure en ligne de microbandes.

8. Résonateur/antenne selon l'une quelconque des revendications 4 à 7 **caractérisé en outre en ce que** lesdites première et seconde antennes à bande large (206, 208) sont agencées pour avoir des configurations de polarisation orthogonales.

9. Résonateur/antenne selon l'une quelconque des revendications 1 à 3 **caractérisé en outre en ce que** l'une des première et seconde antennes comprend une antenne fractale (1300) ayant une géométrie **caractérisée par** une pluralité de paramètres génératifs et un ordre d'itération, dans lequel l'antenne fractale présente une pluralité de résonances distinctes dans le domaine de radiofréquence (RF), une fréquence caractéristique de chaque dite résonance dépendant desdits paramètres génératifs et de l'ordre d'itération.

10. Procédé de codage d'informations pour interrogation et ou récupération par excitation radiofréquence (RF), le procédé comprenant :
de fournir une structure de résonateur/antenne (102, 1611) qui comprend une structure de multirésonateur (104, 1608) comprenant une pluralité de sous-structures auxquelles sont associés une pluralité de résonances dans le domaine RF, chaque dite résonance ayant une fréquence caractéristique dépendant des sous-structures, moyennant quoi des informations peuvent être codées dans les résonances de fréquence caractéristiques de la structure,
de définir une structure de résonateur/antenne en modifiant la configuration de celle-ci de façon à altérer les propriétés de résonances en fonction des informations à coder ; et
de former un résonateur/antenne comprenant une structure conductrice plane disposée sur un substrat diélectrique configuré selon la structure de résonateur/antenne modifiée,
moyennant quoi les informations codées peuvent ensuite être déterminées en appliquant une excitation RF convenable au résonateur/antenne et en identifiant des résonances dans une réponse en fréquence RF correspondante,
**caractérisé en ce que** la structure de résonateur/antenne comprend en outre des première (106, 1608) et seconde (108, 1610) structures d'antenne pour recevoir et transmettre des signaux RF, dans lequel au moins une (108, 1610) desdites structures d'antenne est une antenne à bande large.

11. Procédé selon la revendication 10 **caractérisé en outre en ce que** les informations sont codées au moins en partie dans une réponse en amplitude (400) ou une réponse en phase (410) de la structure de résonateur/antenne auxdites fréquences caractéristiques, dans lequel ladite modification de la configuration de celle-ci résulte en des changements correspondant dans ladite réponse en phase ou en amplitude.

12. Procédé selon la revendication 10 ou la revendication 11 **caractérisé en outre en ce que** les deux première (106) et seconde (108) antennes comprennent des antennes à bande large, et la structure de multirésonateur est disposée entre est couplée aux première et seconde antennes, moyennant quoi un signal RF reçu par la première antenne sera propagé via la structure de multirésonateur et transmis par la seconde antenne, et dans lequel modifier la configuration de la structure de résonateur/antenne comprend de modifier la configuration de la structure de multirésonateur.

13. Tag RFID passif sans puce, document de sécurité, ou instrument négociable **caractérisé en ce qu'**il comprend un résonateur/antenne (102, 1611) selon l'une quelconque des revendications 1 à 9.
